# EUROPÄISCHE PATENTANMELDUNG

(11) **EP 1 116 639 A1**
(43) Veröffentlichungstag der Anmeldung: **18.07.2001**
(21) Anmeldenummer: 00100161.9
(22) Anmeldetag: 11.01.2000
(51) Int. Cl.: B62B 13/06

(54) **Sportgerät**

(71) Anmelder: Gottschalk, Werner, D-82069 Hohenschäftlarn (DE); Gottschalk, Christoph, D-82069 Hohenschäftlarn (DE)
(72) Erfinder: Gottschalk, Werner, D-82069 Hohenschäftlarn (DE); Gottschalk, Christoph, D-82069 Hohenschäftlarn (DE)

(57) **Zusammenfassung**

Sportgerät mit zwei skiförmig ausgebildeten Kufen, die mit einer elastischen, an bestimmten Stellen stabilisierten und speziell ausgebildeten Platte, bevorzugt aus Kunststoff, verbunden sind, wobei diese durch bewegliche Spannvorrichtungen eine u-förmige (umgedrehtes "U") Gestalt bekommt. Materialbedingt stellt die so gebogene Platte gleichzeitig die Sitzfläche und ein vielseitiges Steuerelement dar, und zwar dadurch, dass sich durch die Verschiebung der Platte in sich, also mit Veränderung des Scheitelpunktes im Bogen der Platte, verschiedene, dabei zwangsläufig gegensinnige Längen der Schenkel (des "U") ergeben und damit eine Verkantung der Kufen, die zudem materialbedingt noch verschwenkbar sind, eintritt, so dass das Kurvenfahren und sogar das Traversieren eines Hanges möglich ist.

## Beschreibung

Die Erfindung betrifft ein Sportgerät nach den Ansprüchen 1 bis.7

Das erfindungsgemäße Sportgerät ist in erster Linie als Wintersportgerät zum Einsatz auf Ski- oder Rodelpisten, also auf Schneepisten vorgesehen, es kann jedoch auch auf Sand- oder Grashängen und -pisten, auf Kunststoffpisten oder dergleichen gefahren werden oder auch als Wassersportgerät eingesetzt werden.

Ein gattungsgemäßes Sportgerät ist aus der DE-PS 37 01 252 C2 bekannt. Bei dem dort beschriebenen Schlitten sind zwei parallel angeordnete Kufen an ihren vorderen Enden über eine Strebe und im hinteren Bereich über ein muldenförmiges Sitzelement verbunden. Die Verbindung der Strebe mit den Kufen sowie des Sitzelements mit den Kufen erfolgt jeweils über Gelenke, deren Drehachsen in Schlittenlängsrichtung geneigt verlaufen und zwar derart, dass die Drehachsen in Fahrtrichtung ansteigen. Weiterhin ist ein Lenkseil vorgesehen, dessen Enden jeweils in den Verbindungsbereichen zwischen der Strebe und den Kufenspitzen befestigt sind. Bei dem beschriebenen Schlitten wird durch Fußdruck auf das skiähnlich aufgebogene Ende der kurvenäußeren Kufe und Zug am Lenkseil der kurveninneren Kufe eine gleichsinnige Verkantung bei gleichzeitiger gegenseitiger Längsverschiebung der Kufen bewirkt.

In der EP-PS 0 005 485 B1 ist ebenfalls ein Schlitten mit verkantbaren Kufen beschrieben. Bei dieser bekannten Ausführung sind zwei parallele Kufen über zwei Querstreben miteinander verbunden und die Querstreben sind ihrerseits über eine Sitzplatte miteinander verbunden. Die Anbringung der Querstreben an den Kufen erfolgt über vier Drehgelenke, die in Schlittenlängsrichtung geneigte und dabei in Fahrtrichtung ansteigende Drehachsen aufweisen, die zueinander parallel sind. Weiterhin sind zwischen der Sitzplatte und den beiden Querstreben gelenkige Verbindungen vorgesehen. Bei der Steuerung des Schlittens tritt gleichzeitig eine gegensinnige Längsverschiebung der Kufen, eine gleichsinnige Verkantung der Kufen sowie eine Verkippung der Sitzplatte auf. Durch ihre gelenkige Aufhängung wird die Sitzplatte in die Schlittensteuerung miteinbezogen.

Weiterhin ist aus der DE-PS 23 83 12 ein Schlitten bekannt, der durch Schrägstellen der Kufen lenkbar ist. Bei dem dortigen Schlitten sind unterhalb einer Sitzfläche vier Vertikalsäulen angeordnet, in denen vier Stangen gleitbar aufgenommen sind, die paarweise jeweils starr mit einer Kufe verbunden sind. Die Stangen sind als Zahnstangen ausgeführt, die mit Ritzeln zusammenwirken, die mittels zweier Handhebel verdreht werden können.
Jede der beiden Kufen kann somit durch Bedienung der Handhebel separat aus den Vertikalsäulen ausgefahren werden. Durch unterschiedliches Ausfahren der Kufen ergibt sich dann eine Schrägstellung des Schlittens mit einer entsprechenden gleichsinnigen Einkantung der Kufen in die Aufstandsebene.

Weiterhin ist aus der DE 4319090 C 2 ein Sportgerät bekannt, das ebenfalls durch Schrägstellen der Kufen lenkbar ist. Dies geschieht mit speziell verschwenkbaren Kufengelenken, die über ein u-förmiges Ausgleichselement verbunden sind und zwar derart, dass eine Verkürzung eines auf einer Seite aus dem Verbindungs- (gleichzeitig Steuer-) element herausragenden Abschnitts des Ausgleichselementes, eine Verlängerung des auf der anderen Seite des Verbindungselementes herausragenden Abschnitts des Ausgleichselementes ergibt und umgekehrt.

Der Fahrer nimmt hierbei eine knieende Haltung ein und erreicht durch Bewegung des Steuerbügels nach rechts und links eine gleichsinnige Verkantung der Kufen sowie auch eine Einzelsteuerbarkeit der Kufen. Um diesen Effekt zu erreichen, ist jedoch ein hoher, teils präzisions-technischer Aufwand erforderlich, der eine wirtschaftliche Verwertung nicht zulässt.

Die jetzt der Erfindung zugrundeliegende Aufgabe besteht darin ein Sportgerät zu schaffen, bei dem ohne wesentliche mechanische Teile ein Verkanten der Kufen und damit ein Kurvenfahren nur durch bestimmte Körperbewegungen und damit verbundene Gewichtsverlagerung des Fahrers möglich ist.

Diese Aufgabe wird durch ein Sportgerät mit den Merkmalen der Ansprüche 1 bis .. gelöst.

Durch das erfindungsgemäße Konzept, Kufen über ein Verbindungselement in Form einer speziell gestalteten und teilweise profilierten Platte, (im oberen Teil als Sitzfläche dienend) aus einem biegsamen Material, z.B. Kunststoff, zu verbinden, wird ein neuartiges Sportgerät geschaffen, bei dem eine einfache, variantenreiche, dem Skifahren ähnliche Steuerungsmöglichkeit gegeben ist.

Die mittels einer Spannvorrichtung zu einem "U" (umgekehrtes "U") gespannte Platte mit integrierten oder angebrachten Kufen ermöglicht vor allem auch das Traversieren eines Hanges, ohne den Körperschwerpunkt zu beeinflussen.
Dies ist bisher mit herkömmlichen Schlitten nicht möglich, bzw. nur bedingt und nur mit einem großen technischen Aufwand, da zwangsläufig beide Kufen gleichzeitig der jeweiligen Hangneigung folgen, d.h. nicht verkanten, und die Sitzfläche und somit der Fahrer ebenfalls hangabwärts geneigt sind. Auch eine entsprechende Korrektur des Körpers verändert an der Lage des Schlittens im Vergleich zur jeweiligen Aufstandsebene selbst aber nichts

Bei dem erfindungsgemäßen Sportgerät ist es jedoch - auch ohne komplizierte und aufwendige mechanische Vorrichtungen - möglich, senkrecht, sozusagen im Lot sitzend, einen Hang zu traversieren. Das Sportgerät schiebt sich praktisch unter dem Gesäß des Fahrers hindurch, wenn dieser das talseitige Knie etwas streckt, wodurch umgekehrt zwangsläufig das bergseitige Knie angezogen wird.
Der talseitige "Schenkel" des "Us" wird also durch die Verschiebung des Scheitelpunktes im Bogen des "Us" länger und der bergseitige "Schenkel" entsprechend kürzer. Es handelt sich also um eine gleichsinnige Verkantung der Kufen bei gleichzeitiger gegensinniger Längenveränderung der Schenkel.
Damit wird eine beeinflussbare und flexible Anpassung an die Hangneigung erreicht, bzw. auch jeder andere gewünschte Neigungswinkel der Kufen, d.h. des gesamten Gerätes, im
Bezug auf die jeweilige Aufstandsebene möglich.
Dies ist besonders wichtig auch für das Abbremsen und Kurvenfahren bis hin zur Falllinie, da die gegensinnig miteinander korrespondierenden "Schenkel" eine Körperverlagerung zum Kurvenmittelpunkt hin ( wie beim Skifahren ) ermöglichen und die Kufen wunschgemäß verkanten. Durch das zusätzliche Zusammendrücken der Knie und das Herausdrücken der Fersen kann der Fahrer, der eine ähnliche Haltung wie ein Reiter im Galopp oder auf einem Sportmotorrad einnimmt, das Gerät und die damit fest verbundenen Kufen unmittelbar beeinflussen, so dass ein Pflug oder Stemmbogen gefahren werden kann und somit auch eine Bremswirkung erzielt wird.

Die Bremswirkung kann durch skistopperartige Bremselemente mit Federwirkung noch verstärkt werden, vor allem auch damit das Sportgerät ohne Fahrer selbständig zum Stehen kommt.

Die Spannvorrichtung besteht bevorzugt aus zwei Stangen, die etwa in der Mitte der Schenkellänge fast quer zu diesen, überkreuzt und beweglich angebracht sind und zwar in Führungsrillen an den beiden "Schenkeln" des "U".

Die beiden Stangen stellen also Distanzhalter dar, die aber durch ihre eingeschränkte Bewegungsfreiheit in den vier Führungsrillen und durch die überkreuzte Anordnung einen größeren oder kleineren Abstand zwischen den Schenkeln des "U" erlauben.

Es ergibt sich also ein kleinerer Abstand, wenn beim Traversieren am Hang die Stangen zwangsläufig mit den sich ändernden Längen der "Schenkel" schräg verlaufen, also immer parallel zur Hangneigung.
Eine weitere Ausführungsform der Spannvorrichtung besteht aus zwei Seilen, die quer zu den "Schenkeln" mit einer einfachen Einhängevorrichtung angebracht werden, entweder parallel verlaufend oder auch überkreuz.
Die normalerweise parallel geführten Kufen können durch die beschriebenen Spannvorrichtungen und die elastische Kunststoffplatte auch v-förmig gestellt werden und sind somit bis zu einem gewissen Winkel verschwenkbar.

Die Stangen mit einem ellipsenförmigen Ende werden erst für den Einsatz des Sportgerätes eingehängt, d.h. in eine ebenfalls ellipsenförmige Öffnung in der Mitte der Führungsrillen eingeführt, und in diesen leicht gedreht, so dass die Stangen aus den Führungsrillen nicht mehr herauskönnen. Die Kunststoffplatte wird durch diesen Vorgang gebogen und damit gespannt. Im nichtgespannten Zustand wird die Platte wieder flach und ist so problemlos transportierbar, z.B. auf dem Autodach oder im Kofferraum. Das gleiche gilt für die Spannvorrichtung mit den Seilen.

Bei den beiden geraden Seitenplatten ("Schenkeln" des "U") sind zur Erhöhung der Seitendruckstabilität profilartige, linienförmige Ein- und Ausbuchtungen integriert, die vorwiegend senkrecht zu den Kufen verlaufen. Es ist vorteilhaft, die Platte in diesem Bereich auch noch ergometrisch, an die Sitzhaltung des Fahrers angepasst, auszugestalten. Außerdem sind Verstärkungen im Bereich der Halterungen für die jeweilige Spannvorrichtung vorgesehen.

Im Bereich der Sitzfläche, also im Bereich des Bogens sind zur Erhöhung der Stabilität profilartige, linienförmige Ein- und Ausbuchtungen, die vorwiegend parallel zu den Kufen verlaufen, integriert. Der Bogen darf also nicht durch Stoßwirkungen derart eingedrückt werden, dass die erfindungsgemäße Eigenschaft, dass sich die Platte unter dem Gesäß durchschieben lässt, beeinträchtigt wird.

Damit der Fahrer, der auf dem Bogen der gespannten Platte sitzt, einen festen Halt hat, also seine Körperbewegungen unmittelbar besser übertragen kann, sind für die Hände im vorderen Bereich des Bogens Haltegriffe angebracht, auch in Form von ergometrisch entsprechend positionierten Aussparungen, so dass man eine leicht mit dem Oberkörper nach vorne liegende Haltung einnehmen kann, sich also beim Bewegen der Knie daran abstützen kann.
Für die Füße gibt es ebenfalls ergometrisch richtig positionierte Aussparungen in der Platte, direkt über den Kufen, auf denen die Füße (Zehen) abgestellt werden. Eine Formschale auf jeder Kufe verhindert, dass sich der Fuß verschieben kann.

## Patentansprüche

1. Sportgerät mit zwei skiförmig ausgebildeten Kufen, die mit einem biegsamen Verbindungselement, das gleichzeitig eine Sitz- und Steuerfunktion ausübt, verbunden sind, dadurch **gekennzeichnet**,
- dass es sich bei dem Verbindungselement um eine dauerelastische, speziell ausgebildete Platte, bevorzugt aus Kunststoff, handelt und
- dass durch an der Platte angebrachte Spannvorrichtungen dieses seine für den erfindungsgemäßen Verwendungszweck notwendige, im wesentlichen u-förmige (umgedrehtes "U") Gestalt bekommt und der Bogen des "U" die Sitzfläche darstellt.

2. Sportgerät nach Anspruch 1, dadurch
**gekennzeichnet**,
- dass die Spannvorrichtung aus einer oder mehreren, derart an der Platte angebrachten Stangen (Distanzhalter) besteht, dass diese Stangen zueinander parallel oder überkreuz verlaufen und
- dass die Spannvorrichtung an der Platte (gebogener Zustand) jeweils an der Innenseite, mit einem begrenzten Spielraum, beweglich verankert ist und
- dass die Spannvorrichtung alternativ aus mindestens zwei Seilen besteht, die parallel zueinander oder überkreuz verlaufen und jeweils an der Innenseite der Platte (gebogener Zustand)angebracht sind.

3. Sportgerät nach Anspruch 1 und 2, dadurch
**gekennzeichnet**,
- dass sich die u-förmig gespannte Platte materialgemäß dergestalt in sich verschieben lässt, dass der eine Schenkel des "U" länger und der andere entsprechend kürzer wird (gegensinniges Verschieben), unter gleichzeitiger Positionsveränderung des Scheitelpunktes des Bogens, der sich durch die Biegung der Platte ergibt.

4. Sportgerät nach Anspruch 1 bis 3, dadurch
**gekennzeichnet**,
- dass die Platte in den beiden geraden Seitenflächen ("Schenkeln" des "U") im wesentlichen senkrecht zu den Kufen verlaufende, profilartige Verdickungen und/oder linienförmige Ein- bzw. Ausbuchtungen aufweist.

5. Sportgerät nach Anspruch 1 bis 4, dadurch
**gekennzeichnet**,
- dass die Platte im oberen Bereich des u-förmigen Bogens (Sitzfläche), im wesentlichen parallel zu den Kufen verlaufende, profilartige Verdickungen und/oder linienförmige Ein- bzw. Ausbuchtungen aufweist.

6. Sportgerät nach Anspruch 1 bis 5, dadurch
**gekennzeichnet**,
- dass die Platte im Bereich des Übergangs in die Kufen derart mit vorwiegend quer zu den Kufen verlaufenden, profilartigen Verstärkungen versehen ist und mit den Kufen so fest verbunden wird, dass sich der Winkel zu den Kufen nicht verändern kann.

7. Sportgerät nach Anspruch 1 bis 6, dadurch
**gekennzeichnet**,
- dass im oberen Bereich der Platte, vorne und hinten, Haltevorrichtungen in Form von Aussparungen bzw. Erhöhungen (Formschalen) angebracht sind.
- dass im unteren Bereich der Platte, direkt über den Kufen, Haltevorrichtungen, in Form von Aussparungen bzw. Erhöhungen (Formschalen) angebracht sind.
